# EUROPEAN PATENT APPLICATION

(11) **EP 2 876 090 A1**
(43) Date of publication of application: **27.05.2015**
(21) Application number: 14818713.1
(22) Date of filing: 06.06.2014
(51) Int. Cl.: C02F 1/68, A61L 2/18, C02F 1/46, C25B 1/10, C25B 11/03, C25B 15/08

(54) **METHOD FOR PRODUCING WATER HAVING HYDROGEN MOLECULES DISSOLVED THEREIN**

(30) Priority: 27.06.2013 JP 2013134727
(71) Applicant: Spring Co., Ltd., Tokyo 116-0011 (JP); Nakamoto, Yoshinori, Hiroshima-shi, Hiroshima 730-0014 (JP)
(72) Inventor: SUMITA, Osao, Tokyo 116-0011 (JP)
(74) Representative: Vossius & Partner Patentanwälte Rechtsanwälte mbB
(86) International application number: PCT/JP2014/003025
(87) International publication number: WO 2014/208017

(57) **Abstract**

[Problem] To extend the life of the concentration of dissolved hydrogen molecules in water having the hydrogen molecules dissolved therein.

[Solution] A method for producing water having hydrogen molecules dissolved therein, wherein the water contains hydrogen molecules at a concentration of 0.8 ppm or more. The method is characterized by allowing a stabilizer for dissolved hydrogen molecules to interact with electrolytically reduced water that contains hydrogen molecules, wherein the stabilizer comprises a sugar and/or a polyphenol.

## Description

### Technical Field

The present invention relates to a method of producing hydrogen molecule-dissolved water having a high concentration of dissolved hydrogen molecules.

### Background Art

Water in which hydrogen molecules are dissolved (hereinafter, collectively referred to as hydrogen molecule-dissolved water) has attracted attention as functional water having an antioxidative action.

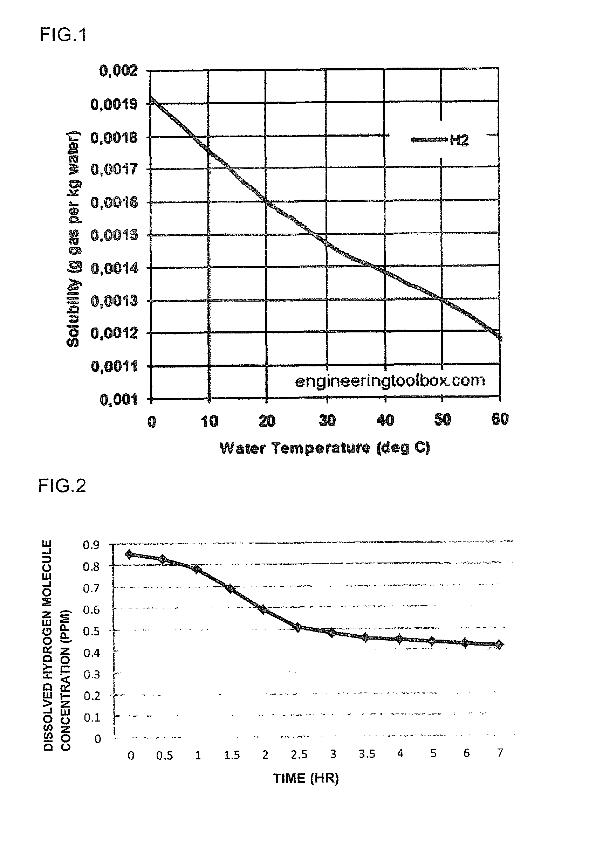

Examples of a method for dissolving hydrogen molecules in water may include an electrolytic reduction method, a dissolution method by pressurizing hydrogen gas, and a dissolution method using metal such as magnesium. The concentration of hydrogen molecules dissolved in water is up to about 1.5 ppm in equilibrium of hydrogen gas in contact with water, as shown in FIG. 1.

Since reduction water produced by electrolytic reduction is in contact with the air, the concentration of hydrogen molecules dissolved in water is much lower than 1.5 ppm. For example, when reduction water produced by electrolytic reduction is stored in a PET bottle or the like, the concentration of hydrogen molecules dissolved in water is 0.5 ppm or less after a certain period of time. Therefore, when hydrogen water is stored in contact with the air, part of dissolved hydrogen molecules vaporizes in the air to decrease the concentration of dissolved hydrogen molecules.

In order to maintain the concentration of dissolved hydrogen molecules immediately after production by electrolytic reduction, it is necessary that a substance that interacts with hydrogen molecules be made to coexist. As described in Patent Literature 1, it is shown that a cell-extraction component interacts with hydrogen molecules. However, the life span of hydrogen molecules dissolved in hydrogen molecule-dissolved water cannot be extended only by addition of the cell-extraction component.

### Citation List

### Patent Literature

Patent Literature 1: International Publication No. 2008/062814

### Summary of Invention

### Technical Problem

An object to be achieved by the present invention is to extend the life span of the concentration of hydrogen molecules dissolved in hydrogen molecule-containing water.

### Solution to Problem

The present inventor has intensively investigated to achieve the object, and a result, found that the object can be achieved by bringing into contact with reduction water obtained from an electrolytic cell of a specific structure. Thus, the present invention has been completed.

Specifically, the present invention relates to a method of producing hydrogen molecule-dissolved water by electrolysis of water in a cathode chamber. In the method, an electrolytic cell for electrolysis of water is an electrolytic cell in which the cathode chamber having a cathode electrode and an anode chamber having an anode electrode are separated through a diaphragm, the cathode electrode is porous, and the porous cathode electrode is disposed at a distance of 1.0 mm or less from the diaphragm. The hydrogen molecule-dissolved water is cathodic water obtained by supplying raw material water to an electric reaction surface from the pores or discharging water produced by an electrolytic reaction from the pores to a back portion of the electrode. The concentration of dissolved hydrogen molecules is 0.8 ppm or more.

### Advantageous Effects of Invention

Hydrogen molecule-containing water in which the life span of the concentration of dissolved hydrogen molecules is extended can be obtained.

### Brief Description of Drawings

FIG. 1 is a graph showing a relation between temperature and concentration of equilibrium dissolved hydrogen molecules.
FIG. 2 is a graph showing a change in the concentration of dissolved hydrogen molecules with time immediately after electrolysis.
FIG. 3 is a schematic view illustrating a structure of a two-chamber electrolytic cell.
FIG. 4 is a schematic view illustrating a reaction of generating hydrogen molecules on a surface of a cathode electrode.
FIG. 5 is a schematic view illustrating a structure of a basic electrolytic cell for producing concentrated hydrogen molecule-dissolved water.
FIG. 6 is a top view of a porous electrode.
FIG. 7 is a schematic view illustrating a structure of an electrolytic cell for producing concentrated hydrogen molecule-dissolved water.
FIG. 8 is a schematic view illustrating a structure of a three-chamber electrolytic cell.
FIG. 9 is a schematic view illustrating a structure of an electrolytic cell of supplying a dissolved hydrogen molecule-stabilizing agent from a back side.
FIG. 10 is a schematic view illustrating a structure of an electrolytic cell of supplying a dissolved hydrogen molecule-stabilizing agent from a back side.
FIG. 11 is a perspective view of a cathode electrode used in the electrolytic cell of supplying a dissolved hydrogen molecule-stabilizing agent from a back side.
FIG. 12 is a perspective view of a cathode electrode used in the electrolytic cell of supplying a dissolved hydrogen molecule-stabilizing agent from a back side.
FIG. 13 is a perspective view of a cathode electrode used in the electrolytic cell of supplying a dissolved hydrogen molecule-stabilizing agent from a back side.
FIG. 14(a) is a schematic view illustrating a structure of an electrolytic cell that has a tube for a dissolved hydrogen molecule-stabilizing agent disposed in a cathode chamber.
FIG. 14(b) is a schematic view illustrating a structure of an electrolytic cell that has a chamber for a dissolved hydrogen molecule-stabilizing agent on a back side of a porous cathode electrode disposed in a cathode chamber, and a porous film between the porous cathode electrode and a chamber for a cell-extraction component solution.
FIG. 15(a) is a schematic view illustrating a structure of a three-chamber electrolytic cell that has a chamber for a cell-extraction component solution on a back side of a porous cathode electrode disposed in a cathode chamber, and a porous film between the porous cathode electrode and a chamber for a dissolved hydrogen molecule-stabilizing agent.
FIG. 15(b) is a schematic view illustrating a structure of a three-chamber electrolytic cell that has a chamber for a dissolved hydrogenmolecule-stabilizing agent on a back side of a porous cathode electrode disposed in a cathode chamber.
FIG. 16(a) is a flow diagram illustrating a system that circulates a dissolved hydrogen molecule-stabilizing agent through a cathode chamber to improve interaction, and is capable of cleaning with anode electrolyzed water.
FIG. 16(b) is a flow diagram illustrating a system that circulates a dissolved hydrogen molecule-stabilizing agent from a back side of a porous cathode electrode to a front side to improve interaction, and is capable of cleaning with anode electrolyzed water.
FIG. 17 is a view showing an effect of increasing the concentration of dissolved hydrogen molecules due to a porous cathode electrode capable of supplying raw material water from a back side and an effect of further increasing the concentration of dissolved hydrogen molecules due to a dissolved hydrogen molecule-stabilizing agent.
FIG. 18 is a flow diagram illustrating a system that supplies a highly dissolved hydrogen molecule liquid produced in a porous cathode electrode to a chamber for a dissolved hydrogen molecule-stabilizing agent, and has a function of cleaning with an anodic solution.
FIG. 19 is a graph showing an effect of a dissolved hydrogen molecule-stabilizing agent against the concentration of hydrogen molecules dissolved in hydrogen water obtained from high-purity water through a reverse osmosis membrane filter utilizing the system in FIG. 18.
FIG. 20 is a flow diagram illustrating a system that supplies cathodic water in which the concentration of dissolved hydrogen molecules is increased by use of a circulation line, to a dissolved hydrogen molecule-stabilizing agent on a back side to further improve interaction.
FIG. 21 is a graph showing an effect of a dissolved hydrogen molecule-stabilizing agent against the concentration of hydrogen molecules dissolved in hydrogen water produced using the system in FIG. 20.
FIG. 22 is a flow diagram illustrating an interaction efficiency-improving system that has a tank for a dissolved hydrogen molecule-stabilizing agent and a circulation line between chambers for a dissolved hydrogen molecule-stabilizing agent solution in an electrolytic cell including a porous cathode electrode.
FIG. 23 is a flow diagram illustrating an interaction efficiency-improving system that has a tank for a dissolved hydrogen molecule-stabilizing agent and a circulation line between chambers for a dissolved hydrogen molecule-stabilizing agent solution in a three-chamber electrolytic cell including a porous cathode electrode.
FIG. 24 is a schematic view illustrating a structure of a transportable electrolytic cell having a container that functions as a chamber for a dissolved hydrogen molecule-stabilizing agent solution and a tank for a dissolved hydrogen molecule-stabilizing agent solution on a back side of a porous cathode electrode.
FIG. 25 is a schematic view illustrating a structure of a transportable electrolytic cell in which dissolved hydrogen molecules produced in the electrolytic cell in FIG. 9 are supplied to a tank for a dissolved hydrogen molecule-stabilizing agent solution through a porous tube.

### Description of Embodiments

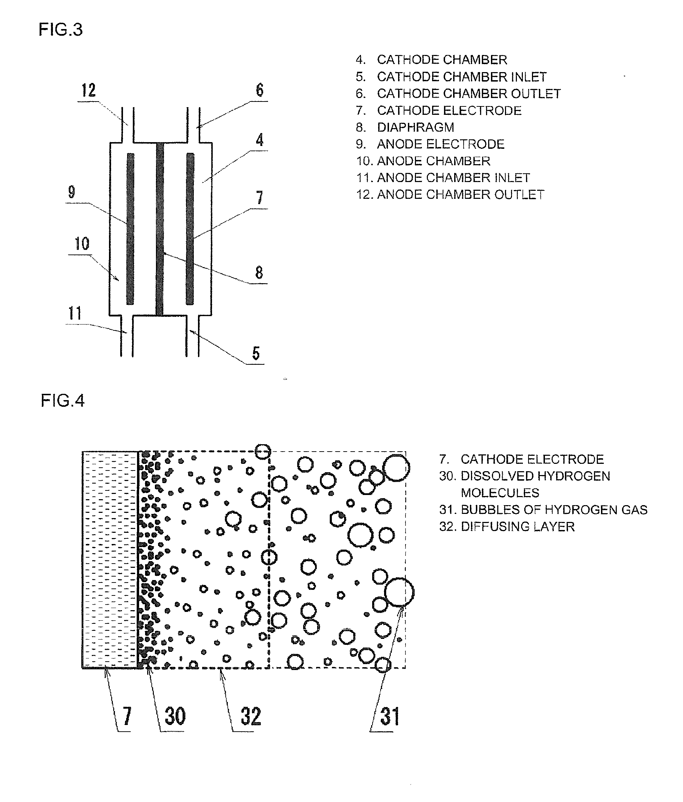

In order to produce concentrated hydrogen molecule-dissolved water, a concentrated dissolved hydrogen molecule solution needs to be produced. A structure of an electrolytic cell suitable for an increase in the concentration of dissolved hydrogen is described in Patent Literature 1. In general electrolysis of high-purity water, electrolysis is performed through a back electrode method by bringing a porous anode electrode and a porous cathode electrode into close contact with both sides of a diaphragm that is a fluorine-based cation exchange membrane. This type of electrolytic cell is suitable for electrolysis of raw material water having a purity of 50 µm or less. A space between the diaphragm and the cathode electrode is filled with an ion exchange resin, and raw material water is supplied to a front side of the cathode electrode rather than to a back side of the electrode. As shown in FIG. 4, concentrateddissolvedhydrogen molecules having a diameter of 100 nm or less are produced in a diffusing layer on a surface of the cathode electrode. Such dissolved hydrogen molecules can be effectively used. Therefore, the concentration of dissolved hydrogen molecules further increases.

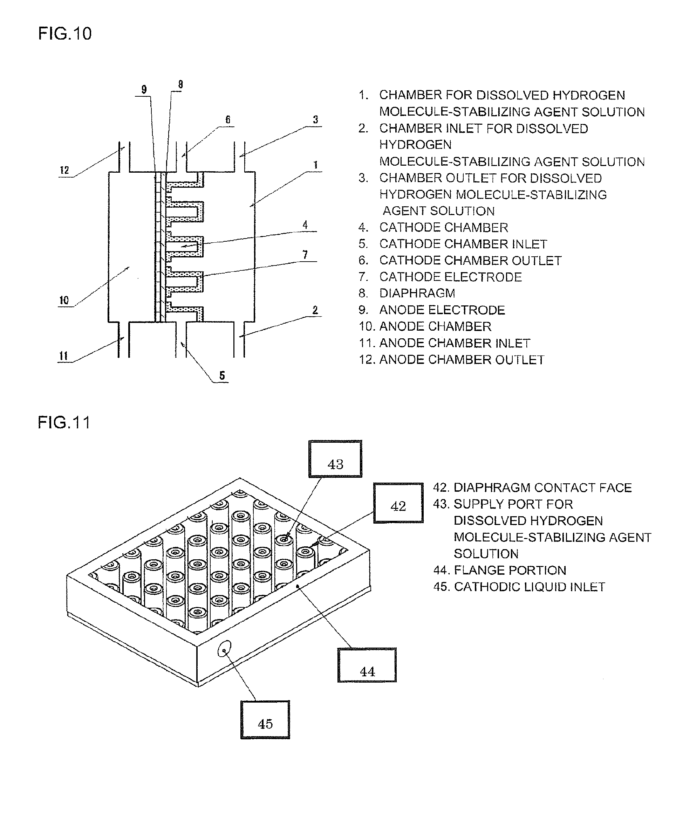

In the present invention, a description will first be given of a structure of an electrode that has an excellent function of efficiently removing a very small amount of soluble hydrogen molecule particles produced on a surface of a cathode electrode, as shown in FIG. 4, into electrolyzed water to further increase the concentration of dissolved hydrogen molecules. When a pore is formed in the cathode electrode as shown in FIGs. 10, 11, 12, and 13, water passes through the pore to efficiently remove dissolved hydrogen molecules from the surface of the electrode. As a result, the concentration of dissolved hydrogen molecules can be further increased.

Concentrated dissolved hydrogen molecules are comparatively unstable and likely to vaporize. Therefore, in order to stably maintain a high concentration of hydrogen molecules, it is necessary that a dissolved hydrogen molecule-stabilizing agent comprising a saccharide and/or a polyphenol that interact with dissolved hydrogen molecules be added. A method for mixing these solutions is classified as follows.
(1) Electrolytic reduction water is produced, and dissolved hydrogen molecules in the solution are caused to interact with a dissolved hydrogen molecule-stabilizing agent comprising a saccharide and/or a polyphenol to retain a high concentration of dissolved hydrogen molecules. This method has two ways described below.
   (i) In a cathode chamber where hydrogen molecules are generated, hydrogen molecules are mixed with an aqueous solution containing the dissolved hydrogen molecule-stabilizing agent comprising a saccharide and/or a polyphenol. In this case, enhancement of efficiency of interaction is considered in views of a mechanism of generating hydrogen molecules.
   (ii) When the dissolved hydrogen molecule-stabilizing agent comprising a saccharide and/or a polyphenol is added to a cathode chamber, the inside of the cathode chamber may be contaminated with the dissolved hydrogen molecule-stabilizing agent comprising a saccharide and/or a polyphenol. In order to cope with this, another chamber is provided on a back side of the cathode chamber, hydrogen molecules produced in the cathode chamber are supplied to the back side, and the dissolved hydrogen molecule-stabilizing agent comprising a saccharide and/or a polyphenol is supplied to the chamber on the back side, to efficiently promote interaction of the hydrogen molecules with the dissolved hydrogen molecule-stabilizing agent. However, the hydrogen molecules produced on a front side of the cathode electrode contains fine hydrogen molecule particles in a very small amount that is larger than the amount of hydrogen molecule particles produced on the back side of the cathode electrode, as described below. This scheme is suitable for use of an insoluble cell-extraction component that has a fine particle shape.
(2) A hydrogen gas in a hydrogen gas cylinder is dissolved in water to cause dissolved hydrogen molecules to interact with the dissolved hydrogen molecule-stabilizing agent comprising a saccharide and/or a polyphenol.
(3) A metal such as magnesium is reacted with water to dissolve hydrogen molecules in water, and the dissolved hydrogen molecules are caused to interact with the dissolved hydrogen molecule-stabilizing agent comprising a saccharide and/or a polyphenol.

In the present invention, a method using electrolytic reduction water will be described. In a general electrolytic cell widely used, an anode electrode 9 and a cathode electrode 7 are disposed on both sides of a diaphragm 8 as shown in FIG. 3. A condition of generating hydrogen molecules on the surface of the cathode electrode is described in (Behavior of Hydrogen Nanobubbles Generated in Alkaline Electrolyzed Water: Toshikazu Takenouchi, and others, Electrochemistry, 77, No. 7 (2009)). In a diffusing layer on the surface of the electrode, a very small amount of hydrogen molecule fine particles is first produced. The fine particles have a diameter of 100 nm or less, and stably exist in water. However, when the hydrogen molecule fine particles in a very small amount separate from the electrode, the particles coalesce to form large particles having a diameter of 1,000 to 10,000 nm. When the sizes of hydrogen molecule particles thus increase, hydrogen molecules are likely to vaporize, and the concentration of dissolved hydrogen decreases.

In the present invention, the cathode electrode is made porous, and raw material water or electrolyzed water is caused to pass through the pores. Thus, the concentration of dissolved hydrogen molecules that are fine is increased. In addition, it is necessary that the dissolved hydrogen molecules be caused to efficiently interact with the dissolved hydrogen molecule-stabilizing agent comprising a saccharide and/or a polyphenol.

When hydrogen molecule fine particles having a diameter of 1,000 nm or more is an objective matter, it is predicted that the efficiency of interaction of the hydrogen molecules with a cell-extraction liquid decreases. In the present invention, hydrogen molecule fine particles having a diameter of 1,000 nm or less are caused to interact with the dissolved hydrogen molecule-stabilizing agent comprising a saccharide and/or a polyphenol. Thus, the efficiency of interaction is improved. Accordingly, the present invention aims at stably increasing the concentration of dissolved hydrogen molecules to 0.8 ppm or more. For this aim, it is necessary that dissolved hydrogen molecules be mixed with the dissolved hydrogen molecule-stabilizing agent comprising a saccharide and/or a polyphenol in a diffusing layer region of the cathode electrode, to promote interaction.

As shown in FIG. 4, concentrated dissolved hydrogen molecules having a diameter of 100 nm or less are produced in a diffusing layer 32 on the surface of the cathode electrode 7. In the present invention, an electrode structure capable of using such concentrated dissolved hydrogen molecules in a fine particle shape is considered. The present invention aims at extending the life span of produced concentrated dissolved hydrogen molecules to utilize a function of the hydrogen molecules.

In this method, it is necessary that dissolved hydrogen molecules be caused to efficiently interact with the dissolved hydrogen molecule-stabilizing agent comprising a saccharide and/or a polyphenol. In hydrogen molecule fine particles having a diameter of 1, 000 nmormore, it is predicted that the efficiency of interaction of the hydrogen molecules with a cell-extraction liquid decreases. In the present invention, hydrogen molecule fine particles having a diameter of 1,000 nm or less are caused to interact with the dissolved hydrogen molecule-stabilizing agent comprising a saccharide and/or a polyphenol. Thus, the efficiency of interaction is improved. As a result of this, the present invention aims at stably increasing the concentration of dissolved hydrogen molecules to 0.5 ppm or more. For this aim, it is necessary that dissolved hydrogen molecules be mixed with the dissolved hydrogen molecule-stabilizing agent comprising a saccharide and/or a polyphenol in a region of the diffusing layer of the cathode electrode, to promote interaction.

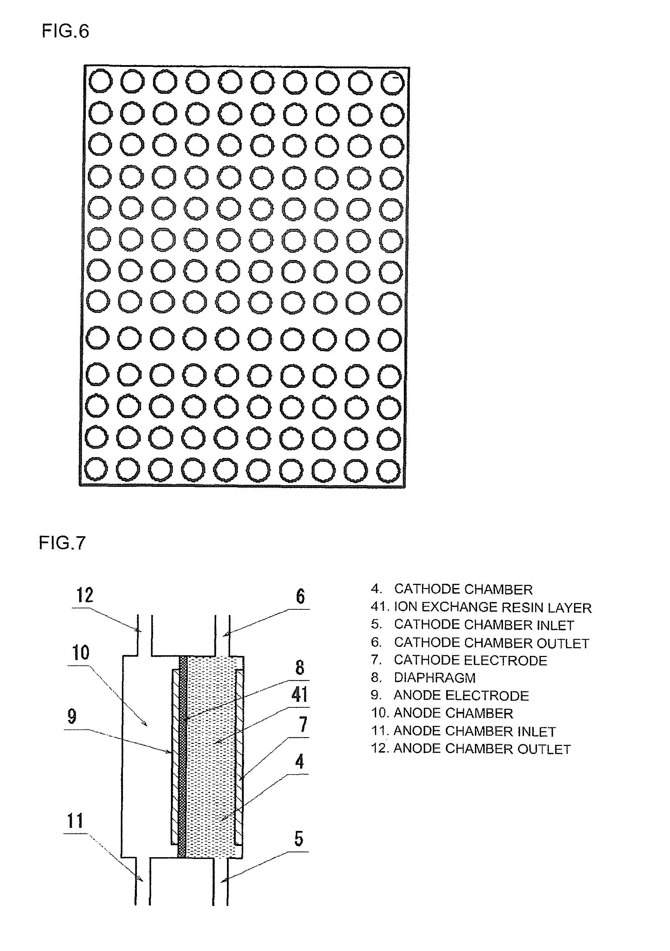

In order to promote interaction in the diffusing region, it is necessary that the structure of the cathode electrode be improved. As a first step of this improvement, a porous anode electrode and a porous cathode electrode, as shown in FIG. 6, are brought into close contact with both sides of a diaphragm that partitions a chamber into an anode chamber and a cathode chamber in a structure of the electrolytic cell. When the purity of rawmaterial water is increased to prevent contamination of the cathode electrode with calcium or magnesium ions in the raw material water, the electrolysis voltage increases. When a fluorine-based cation exchange membrane is used, the electrolysis voltage falls within a range of 5 to 20 V even using raw material water having a high purity of higher than 50 µS/cm.

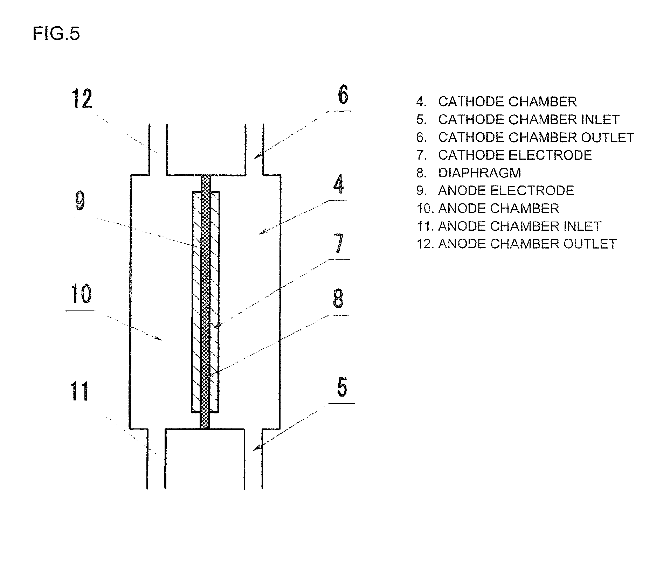

However, in an electrolytic cell in FIG. 5, raw material water is caused to pass through a back side of a cathode electrode on an opposite side of an electrolytic face. This back side is generally referred to as back electrode. When a back electrode is used as described in Patent Literature 1, a space between a cathode electrode 7 and a diaphragm 8 is filled with an ion exchange resin as shown in FIG. 7. In this electrolytic cell, raw material water can be passed through a front side of the cathode electrode, and a very small amount of soluble dissolved hydrogen molecules which are soluble can be utilized.

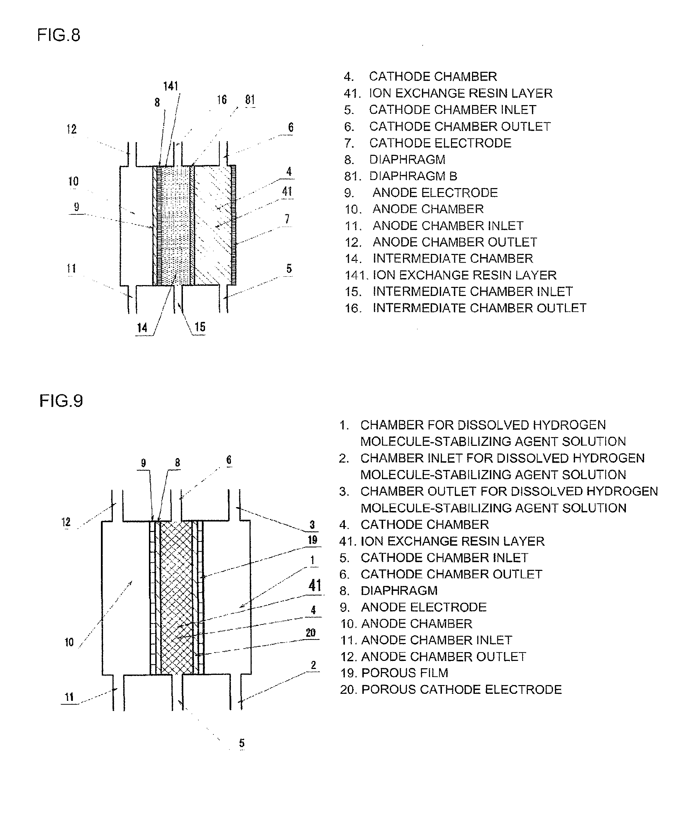

As an improved structure of the electrolytic cell for production of water containing concentrated dissolved hydrogen molecules in FIG. 7, a structure of a three-chamber electrolytic cell that has an intermediate chamber 14 between an anode chamber 10 and a cathode chamber 4, as shown in FIG. 8, can be provided. In the anode chamber 10, an oxidizing substance such as ozone is produced. The intermediate chamber 14 is provided to prevent transfer of the oxidizing substance to the cathode chamber 4.

A structure of an improved electrolytic cell will be described. In the improved electrolytic cell, the efficiency of interaction of hydrogen molecules with the dissolved hydrogen molecule-stabilizing agent comprising a saccharide and/or a polyphenol can be improved on the basis of such an electrolytic cell for production of water containing concentrated dissolved hydrogen molecules. It is essentially necessary that a cell-extract be supplied to the diffusing layer region on the surface of the cathode electrode. In the cathode electrode 7 in the electrolytic cell shown in FIGs. 3 and 5, it is difficult that the dissolved hydrogen molecule-stabilizing agent comprising a saccharide and/or a polyphenol is supplied to the diffusing layer.

For this reason, an electrode having a structure in which the dissolved hydrogen molecule-stabilizing agent can be directly supplied to the cathode electrode is used. The electrode has a structure in which a chamber 1 that is filled with a solution of the dissolved hydrogen molecule-stabilizing agent is provided on a back side of a porous cathode electrode 20 and the dissolved hydrogen molecule-stabilizing agent is supplied from the back side of the cathode electrode, as shown in FIG. 9. When the dissolved hydrogen molecule-stabilizing agent solution is supplied from the back side of the cathode electrode, a component of the dissolved hydrogen molecule-stabilizing agent can be supplied to the diffusing layer. In order to control the supply rate of the dissolved hydrogen molecule-stabilizing agent or use an indigestible dissolved hydrogen molecule-stabilizing agent (insolubility), a porous film 19 may be provided between the porous cathode electrode 20 and the chamber 1 for a dissolved hydrogen molecule-stabilizing agent.

FIG. 10 shows a structure in which the electrolytic cell having such a structure that the porous electrodes are in close contact with both sides of the diaphragm in FIG. 5 is improved so that the dissolved hydrogen molecule-stabilizing agent can be supplied to the diffusing layer. In this structure, the dissolved hydrogen molecule-stabilizing agent is supplied to a portion where a cathode electrode 7 is in contact with a diaphragm 8. At this contact portion, an electrolysis reaction is carried out. Specifically, the dissolved hydrogen molecule-stabilizing agent is supplied to a portion where hydrogen molecules are produced by electrolysis. As a result, the efficiency of interaction of hydrogen molecules with the dissolved hydrogen molecule-stabilizing agent is greatly improved. Examples of the cathode electrode used in the electrolytic cell in FIG. 10 may include cathode electrodes having structures in FIGs. 11, 12, and 13.

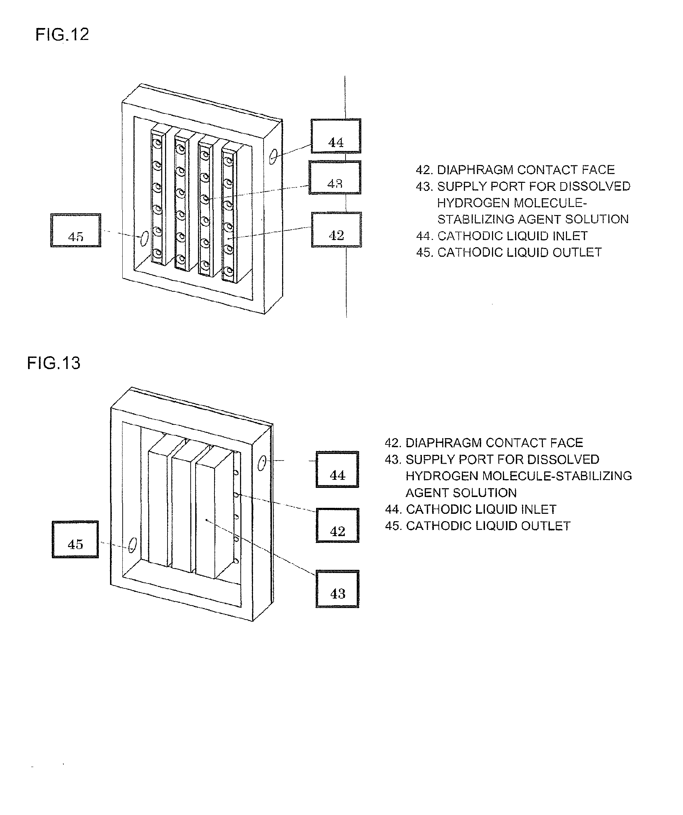

In a cylindrical cathode electrode shown in FIG. 11, an electrolysis reaction is carried out by contact of the cathode electrode with a diaphragm at a diaphragm contact face 42. A pore is formed in the contact face of the cylindrical electrode, and the dissolved hydrogen molecule-stabilizing agent is supplied from the back side of the cathode electrode. From the pore (45, etc.) formed on a side of the cathode electrode, raw material water is supplied and electrolyzed water is discharged. In a comb-shaped cathode electrode shown in FIG. 12, a diaphragm is brought into contact with a diaphragm contact face, as shown in FIG. 11, and the dissolved hydrogen molecule-stabilizing agent solution is supplied from a pore of the contact face. Raw material water is supplied from a cathodic water inlet 44, and electrolyzed water is discharged from a cathodic water outlet 45. By supplying the dissolvedhydrogenmolecule-stabilizing agent to the diffusing layer of the electrode as described above, the efficiency of interaction can be dramatically improved. Further, a cathode electrode has a structure in which the dissolved hydrogen molecule-stabilizing agent can be supplied from a pore that is formed on a bottom face of the cathode electrode that is different from the diaphragm contact face 42, as shown in FIG. 13. However, the efficiency slightly decreases. A distance between the diaphragm and these porous cathode electrodes depends on water quality of raw material water. Specifically, as the conductivity of raw material water is decreased, it is necessary that the distance be shortened. When the conductivity is about 1 µS/cm, it is necessary that the distance be substantially in close contact. When the conductivity is 50 µS/cm, even if the distance is about 1 mm, the electrolysis voltage is a few tens V. Thus, a practical electrolysis condition is achieved.

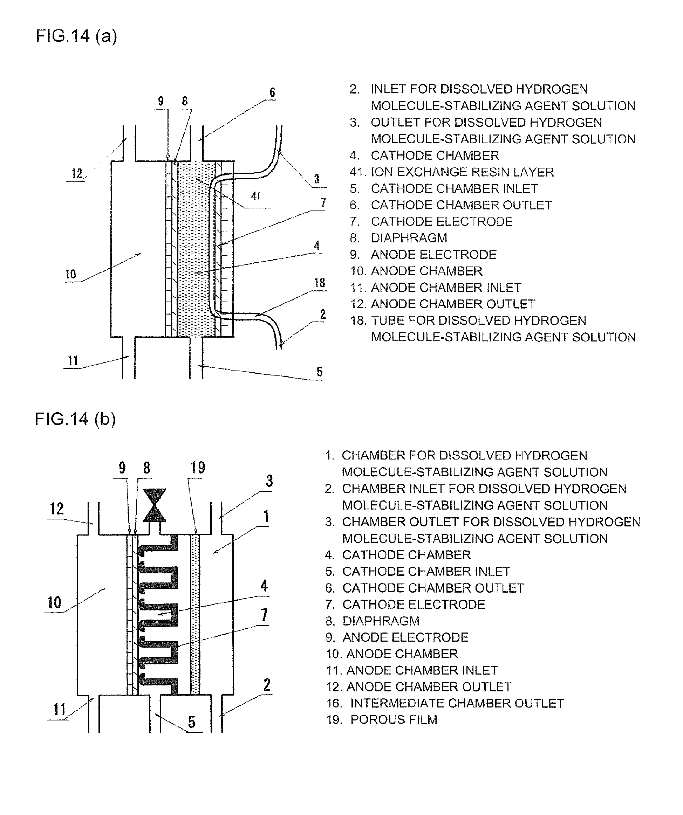

FIG. 14(a) shows a structure of an electrolytic cell using a hollow fiber in a very small pores. The electrolytic cell in which a space between the cathode electrode 7 and the diaphragm 8 is filled with an ion exchange resin, as shown in FIG. 7, is used. A hollow fiber that has many pores is disposed in contact with the surface of the cathode electrode in the cathode chamber 4 of this electrolytic cell. The dissolved hydrogen molecule-stabilizing agent solution is supplied to the hollow fiber. FIG. 14(b) shows a structure in which a porous film is disposed on a back side of a cathode electrode in a cathode chamber of an electrolytic cell in which the electrolytic cell in FIG. 11 or 12 is built.

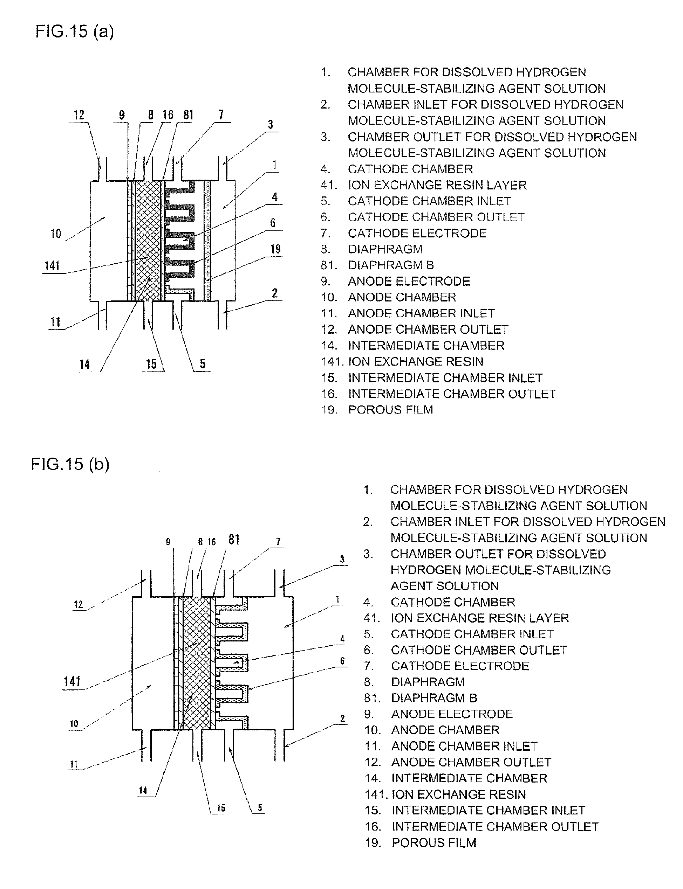

FIG. 15(a) shows a structure of improved electrolytic cell in which a chamber for a dissolved hydrogen molecule-stabilizing agent solution is basically built in a three-chamber electrolytic cell. The structure of the electrolytic cell shown in FIG. 10 is improved to configure the three-chamber electrolytic cell. An intermediate chamber 14 is provided between an anode electrode 9 and a cathode electrode 7 using a pair of diaphragms 8 and 8A. In order to reduce the electrolysis current, the intermediate chamber is filled with an ion exchange resin 141. This structure can prevent transfer of an oxidizing substance produced on the anode electrode to a cathode chamber.

FIG. 15 (b) shows a structure of a three-chamber electrolysis cell, like that shown in FIG. 15(a). In this case, the structure shown in FIG. 14(b) is improved to configure the three-chamber electrolytic cell. This three-chamber electrolytic cell has a structure in which a porous film is further provided in a chamber for a dissolved hydrogen molecule-stabilizing agent solution.

Ameans for adding the dissolved hydrogen molecule-stabilizing agent that interacts with dissolved hydrogen molecules will be described below.

This means is a method in which the dissolved hydrogen molecule-stabilizing agent is added to hydrogen molecule-dissolved water that extracts a natural product raw material such as coffee, so as to suppress volatilization of dissolved hydrogen. A compound to serve as the dissolved hydrogen molecule-stabilizing agent is a saccharide and/or a polyphenol.

A saccharide is at least one kind selected from the group consisting of monosaccharides, disaccharides, oligosaccharides, polysaccharides, and sugar alcohols.

Examples of the saccharide may include glucose, fructose, mannose, xylose, galactose, and ribose. Examples of the disaccharide may include maltose, lactose, cellobiose, and fructose. Examples of the oligosaccharide may include an oligosaccharide.

Examples of the polysaccharide may include chitin, chitosan, starch, glycogen, cellulose, carrageenan, pectin, xyloglucan, gelatin, hyaluronic acid, and alginic acid.

As described in Japanese Patent No. 5227802, it is widely known that an aldehyde group or a glycosidic hydroxyl group has reduction properties as a reductive molecular structure in the dissolved hydrogen molecule-stabilizing agent. This kind of substance includes monosaccharides, disaccharides, oligosaccharides, polysaccharides, and sugar alcohols. Examples of the monosaccharide may include glucose, fructose, mannose, xylose, galactose, and ribose. Examples of the disaccharide may include maltose, lactose, cellobiose, and fructose. Examples of the oligosaccharide may include an oligosaccharide.

In an aldehyde group (CHO group) or a glycosidic hydroxyl group (OH group) of such a substance, a hydrogen atom bonded to oxygen is likely to be dissociated, that is, these groups have an ability of donating a hydrogen atom. Reduction properties will be described with reference to a case of α-glucose. It is considered that a hydrogen atom in a glycosidic hydroxyl group of α-glucose is dissociated to form a complex with dissolved hydrogen. After an electron is transferred from the hydrogen atom to α-glucose, a hydrogen ion forms a complex with a hydrogen molecule. Then, the hydrogen molecule has a charge by interaction with α-glucose, and the presence time of the hydrogen molecule in water can be extended.

A reaction mechanism of an aldehyde group is the same as described above. When a hydrogen atom is likely to be dissociated, as described above, a complex of dissociated hydrogen atom/hydrogen ion has a charge. Therefore, stability in water is improved. In a saccharide in which hydrogen atom/hydrogen ion are unlikely to be dissociated, addition of a component in which hydrogen atom/hydrogen ion are likely to be dissociated, such as vitamin C (ascorbic acid) is effective.

In addition, a similar substance is a polysaccharide that is dietary fibers. Specific examples thereof may include chitin/chitosan, starch, glycogen, cellulose, carrageenan, pectin, xyloglucan, gelatin, hyaluronic acid, alginic acid, and dietary fibers. When they are acidic, a sodium or potassium salt thereof is used. In such a substance, the concentration of reductive reaction group is low as compared with a low molecular weight substance, and the reactivity is low. In this substance, a reductive reaction group may be bonded to a terminal group. When a component has a hydroxy group that is not glycosidic, the reduction properties are comparatively lower, and an effect of extending the life span is low. Among them, a polyphenol is a well-known substance. Specific examples thereof may include catechin, anthocyanin, tannin, rutin, isoflavone, which are flavonoid species, and chlorogenic acid, ellagic acid, lignan, curcumin, and coumarin, which are phenolic acid. These substances alone have a small effect of extending the life span of concentration of dissolved hydrogen. Therefore, it is necessary that the substance be used in combination with a substance of increasing the effect.

Among the substances described above, the above polysaccharide and polyphenol interact with dissolved hydrogen molecules, and are useful in extension of the life span of concentration of the dissolved hydrogen molecules. In the present invention, the dissolved hydrogen molecules are stabilized in water due to the interaction, and the vaporization ratio due to heating decreases. When a dissolved hydrogen molecule-stabilizing agent comprising the polysaccharide and/or polyphenol is added in the upstream of or in the downstream of the electrolytic cell, the life span of the concentration of dissolved hydrogen molecules in a heated solution is extended.

It is generally known that electrolysis of water causes metal ions such as calcium ions that are electrolytes to adhere to the cathode electrode. In consideration of improvement of performance of an electrolytic cell and extension of life span in the present invention, it is desirable that metal ions such as calcium ions be removed from raw material water. Therefore, use of a reverse osmosis membrane filter or a water-softening system is effective, and the conductivity is 100 µS/cm or less. In order to increase the concentration of dissolved hydrogen molecules, raw material water is degassed before an electrolysis operation. Thus, it is possible to further increase the concentration of dissolved hydrogen molecules.

### [Example 1]

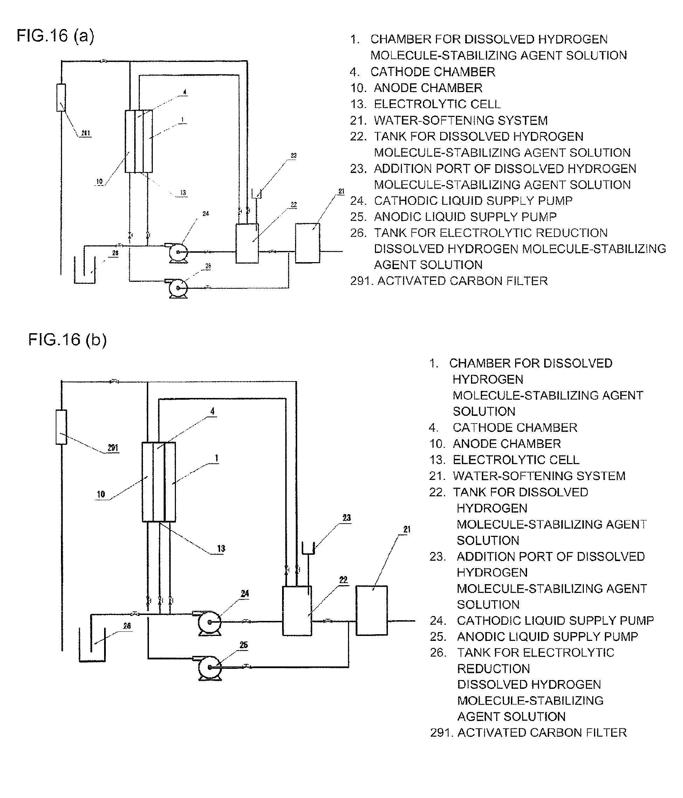

In a flow of a system in FIG. 16(a), the electrolytic cell shown in FIG. 9 in which the porous electrode shown in FIG. 6 that had an electrode area of 6 × 8 mm² was built in an electrolytic cell 13 was built. As shown in FIG. 16(a), an inlet and an outlet of a chamber 1 for a dissolved hydrogen molecule-stabilizing agent solution were not used. Raw material water processed by a water-softening system 21 was caused to pass through a cathode chamber, to carry out electrolysis. The flow rate of a cathodic solution was set to 1.0 to 0.8 l/min. An electrolysis current of 10 A was allowed to pass for initial 9 minutes. A dissolved hydrogen molecule concentration meter KM2100DH manufactured by Kyoei Denshi Kenkyusho was used in measurement of the concentration of dissolved hydrogen molecules.

As shown in FIG. 16 (b), the electrolytic cell 13 shown in FIG. 9 in which the inlet of the cathode chamber and the outlet of the chamber 1 for a dissolved hydrogen molecule-stabilizing agent solution are closed is provided. In the electrolytic cell shown in FIG. 9, the porous electrode shown in FIG. 6 that has an electrode area of 6 × 8 mm² is built. An example in which interaction of a dissolved hydrogen molecule-stabilizing agent with hydrogen molecules using the electrolytic cell enhances the concentration of dissolved hydrogen molecules will be shown. A dissolved hydrogen molecule-stabilizing agent containing indigestible dextrin as a main component was supplied from a tank for a dissolved hydrogen molecule-stabilizing agent solution to the dissolved hydrogen molecule-stabilizing agent in the electrolytic cell, to carry out electrolysis. The flow rate of a cathodic solution was set to 1.0 to 0.8 l/min. The volume of a tank for a cell component solution was set to 5 l. An electrolysis current of 10 A was allowed to pass for initial 9 minutes. The inlet of the cathode chamber and the outlet of the chamber for a dissolved hydrogen molecule-stabilizing agent were closed.

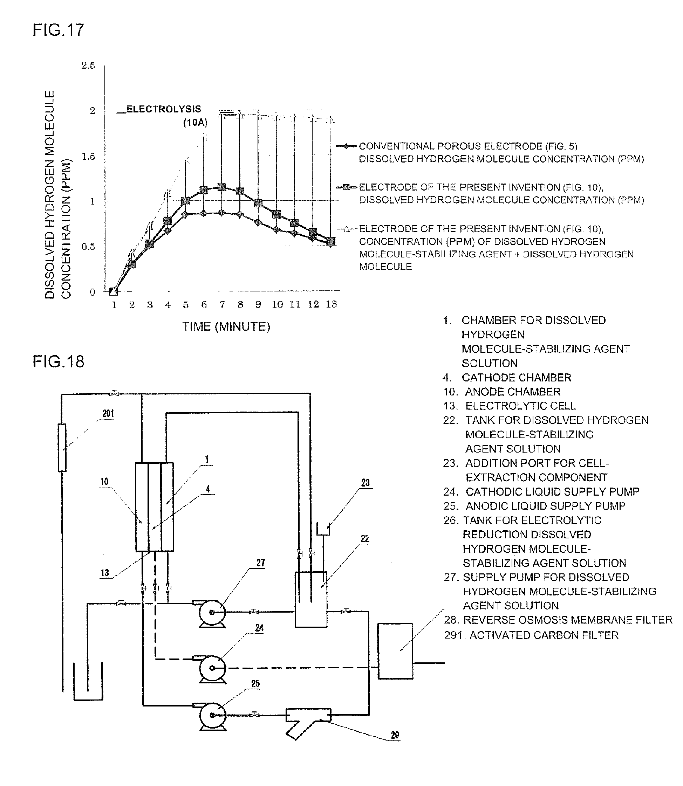

As the dissolved hydrogen molecule-stabilizing agent, indigestible dextrin (soluble) that is one of dietary fibers was selected, and the concentration thereof was set to be less than 5%. The results are shown in FIG. 17. As shown in FIG. 17, the concentration of dissolved hydrogen molecules increases with electrolysis. After electrolysis current is turned off, a problem arises. When the dissolved hydrogen molecules do not interact with the dissolved hydrogen molecule-stabilizing agent after turning off, the rate of decrease in the concentration of dissolved hydrogen molecules is high. On the other hand, when the dissolved hydrogen molecules interact with the dissolved hydrogen molecule-stabilizing agent, the concentration of dissolved hydrogen molecules first increases, and the rate of decrease in the concentration decreases.

In terms of sanitation, there is a problem in which a liquid in which the dissolved hydrogen molecule-stabilizing agent is dissolved remains after electrolysis. Further, this system can achieve the sterilization and cleaning of a cathode electrolysis system using anode electrolyzed water after production of electrolytic reduction water.

### [Example 2]

In contrast to Example 1, a flow of a system in which hydrogen molecules are supplied from a cathode chamber 4 to a chamber 1 for a dissolved hydrogen molecule-stabilizing agent solution is shown in FIG. 18. When the electrolytic cell in FIG. 9 was utilized in this system, a porous film was provided on a back side of a porous cathode electrode of 6 × 8 mm². The diameter of porous pores is 1 to 5 µm.

A dissolved hydrogen molecule-stabilizing agent solution is supplied through the pores to a front side of the porous cathode electrode. Part of the dissolved hydrogen molecule-stabilizing agent solution that has interacted with hydrogen molecules is circulated. The rest of the solution is used.

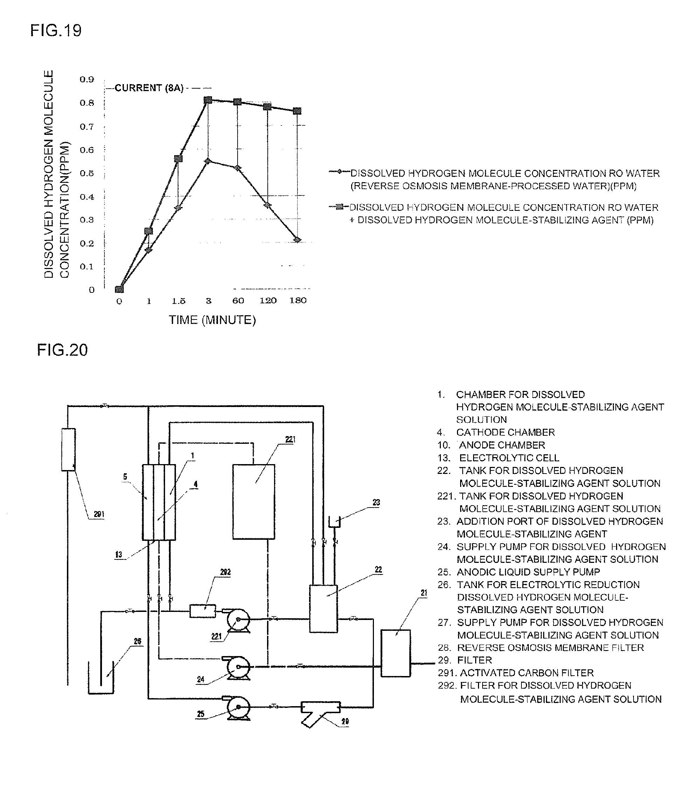

The solution of the dissolved hydrogen molecule-stabilizing agent that contains indigestible dextrin as a main component was supplied from a tank 22 for a dissolved hydrogen molecule-stabilizing agent solution to the chamber for a dissolved hydrogen molecule-stabilizing agent solution in the electrolytic cell, to carry out electrolysis. The flow rate of a cathodic solution was set to 1.0 to 0.8 l/min. The volume of the tank for a dissolved hydrogen molecule-stabilizing agent solution was set to 2 L. The tank was filled with an aqueous solution of 5% indigestible dextrin (insoluble). An electrolysis current of 8 A was allowed to pass for initial 3 minutes. The results are shown in FIG. 19. As seen from the drawings, even when the back side of the cathode electrode is used, an effect of the dissolved hydrogen molecule-stabilizing agent can be confirmed.

### [Example 3]

FIG. 20 shows a system in which a line of a cathode chamber 4 and respective lines of dissolved hydrogen molecule-stabilizing agents are independently operated. In an electrolytic cell 13, the same porous film as in Example 2 was provided on a back side of a porous cathode electrode, as shown in FIG. 9. A discharge pressure of a cathodic solution supply pump is made lower than that of a dissolved hydrogen molecule-stabilizing agent supply pump to transfer the dissolved hydrogen molecule-stabilizing agent to hydrogen molecule fine particles produced in the cathode electrode.

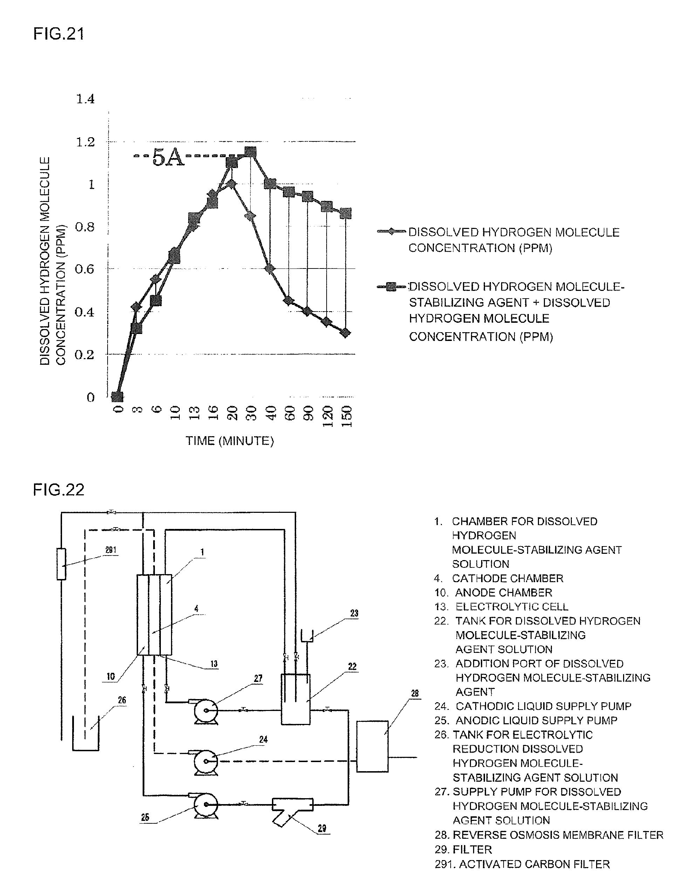

A tank 22 for a dissolved hydrogen molecule-stabilizing agent solution is filled with a solution of 10% indigestible dextrin. Raw material water supplied to the cathode chamber 4 was water processed through a reverse osmosis membrane filter, and the conductivity was set to 10 µS/cm. A current of 8 A was allowed to pass through a porous electrode of 6 × 8 mm², to carry out electrolysis. FIG. 21 shows a change in the concentration of dissolved hydrogen molecules with time obtained by utilizing a flow of the system. As shown in FIG. 21, the indigestible dextrin (insoluble) increases the concentration of dissolved hydrogen molecules, and further extends the life span of the dissolved hydrogen molecules.

### [Example 4]

As shown in a flow of a system of FIG. 22, a tank for cathodic water is provided and cathodic water is circulated in a cathode chamber. In this system, the electrolytic cell shown in FIG. 9 was built. The discharge pressure of a pump for circulating cathodic water is made higher than that of a circulation line of dissolved hydrogen molecule-stabilizing agent solution to supply hydrogen molecules from the cathode chamber to the dissolved hydrogen molecule-stabilizing agent.

A tank for a dissolved hydrogen molecule-stabilizing agent solution is filled with a solution of 5% soluble indigestible dextrin. Raw material water supplied to the cathode chamber was water processed through a reverse osmosis membrane filter, and the conductivity was set to 10 µS/cm. A current of 5 A was allowed to pass through a porous electrode of 6 × 8 mm², to carry out electrolysis.

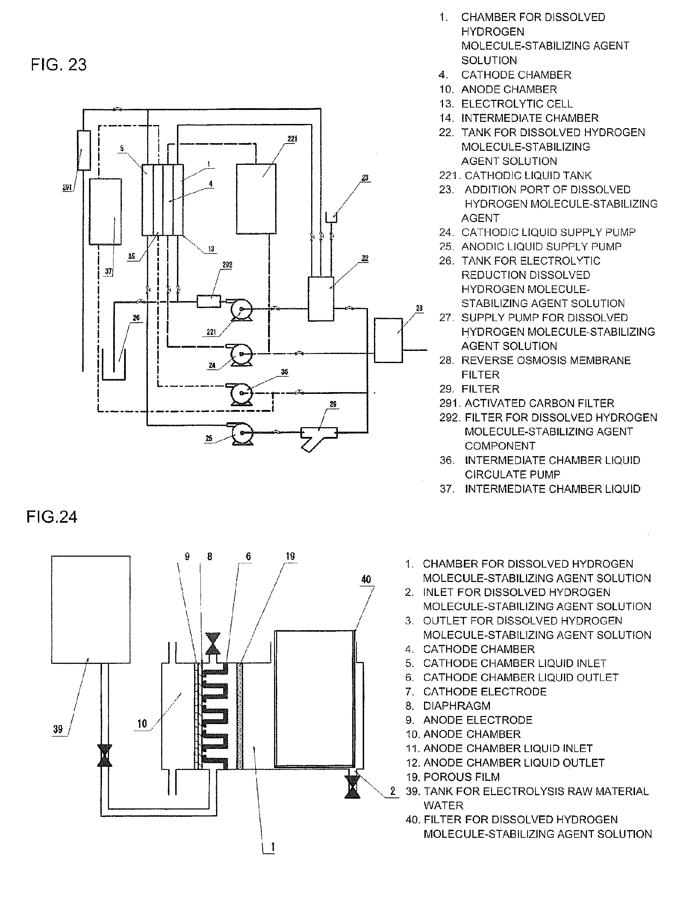

FIG. 23 shows a flow of a system in which the system in FIG. 22 is modified so that the three-chamber electrolytic cell shown in FIG. 14 is built.

### [Example 5]

FIG. 24 shows an overview of a simple transportable device in which concentrated hydrogen molecule water is produced using a dissolved hydrogen molecule-stabilizing agent. The dimension of the chamber for a dissolved hydrogen molecule-stabilizing agent in the electrolytic cell in FIG. 15 (a) is enlarged. Thus, a necessary amount of dissolved hydrogen molecule-stabilizing agent solution can be produced. The device has a structure in which hydrogen molecule gas of a small size is supplied from the cathode electrode to the dissolved hydrogen molecule-stabilizing agent solution. In addition to the electrolytic cell in FIG. 15 (a), the device of the structure can be used in the electrolytic cell in FIG. 9.

Raw material water is supplied from a tank 30 for electrolysis raw material water to a cathode chamber 4 to produce hydrogen molecule fine particles. A hydrogen molecule solution is supplied from a back side of a porous cathode electrode through a porous film with a pore diameter of 0.1 µm to a chamber 1 for a dissolved hydrogen molecule-stabilizing agent solution. The dissolved hydrogen molecule-stabilizing agent is allowed to enter a filter 40 for a dissolved hydrogen molecule-stabilizing agent solution, to cause hydrogen molecules to interact with the dissolved hydrogen molecule-stabilizing agent.

### [Example 6]

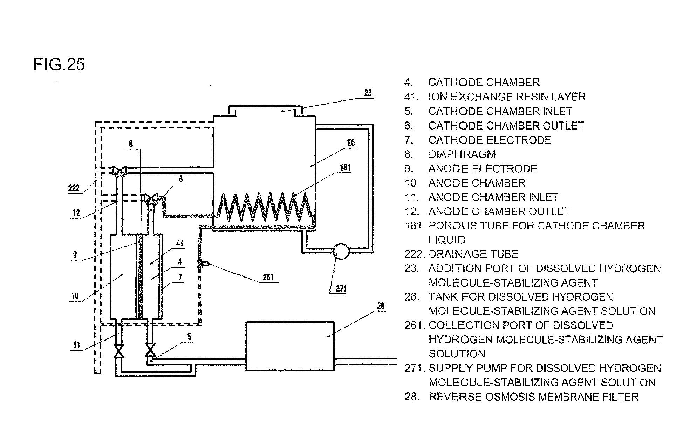

FIG. 25 shows a simple device that enables interaction of hydrogen molecules with a dissolved hydrogen molecule-stabilizing agent using a polypropylene porous film tube 181 having an inner diameter of about 500 µm and a pore diameter of 200 µm. Raw material water of which the purity is increased by a reverse osmosis membrane filter 28 is first supplied, and a cathodic liquid in which hydrogen molecule fine particles produced in a cathode chamber 4 in an electrolytic cell are dissolved is sent to the porous film tube 181. In a tank 26 for a cell-extraction component solution in which this tube is stored, interaction of a cell-extraction component with hydrogen molecules is caused. In order to increase the efficiency of interaction, a circulation pump 271 is used.

After the dissolved hydrogen molecule-stabilizing agent solution is collected, the tank 26 for a dissolved hydrogen molecule-stabilizing agent solution is cleaned and sterilized using oxidized water produced in an anode chamber.

### Industrial Applicability

According to the present invention, the life span of high concentration dissolved hydrogen molecules can be extended. This is very useful for hydrogen molecule-dissolved water.

### [Reference Signs List]

- 1: chamber for dissolved hydrogen molecule-stabilizing agent solution
- 2: inlet for dissolved hydrogen molecule-stabilizing agent solution
- 3: outlet for dissolved hydrogen molecule-stabilizing agent solution
- 30: dissolved hydrogen molecule
- 31: bubble of hydrogen gas
- 32: diffusing layer
- 4: cathode chamber
- 41: ion exchange resin layer
- 42: supply port for dissolved hydrogen molecule-stabilizing agent solution
- 43: flange portion
- 44: cathodic water inlet
- 5: cathode chamber inlet
- 6: cathode chamber outlet
- 7: cathode electrode
- 8: diaphragm
- 81: diaphragm B
- 9: anode electrode
- 10: anode chamber
- 11: anode chamber inlet
- 12: anode chamber outlet
- 14: intermediate chamber
- 141: ion exchange resin layer
- 15: intermediate chamber inlet
- 16: intermediate chamber outlet
- 18: tube for dissolved hydrogen molecule-stabilizing agent solution
- 19: porous film
- 20: porous electrode
- 22: tank for dissolved hydrogen molecule-stabilizing agent solution
- 221: tank for cathodic liquid
- 23: addition port for dissolved hydrogen molecule-stabilizing agent
- 24: cathodic liquid supply pump
- 25: anodic liquid supply pump
- 26: tank for electrolytic dissolved hydrogen molecule-stabilizing agent solution
- 28: reverse osmosis membrane filter
- 291: activated carbon filter
- 292: dissolved hydrogen molecule-stabilizing agent filter
- 35: intermediate chamber
- 36: intermediate chamber circulation pump
- 37: intermediate chamber liquid
- 39: tank for electrolysis raw material water

## Claims

1. A method of producing hydrogen molecule-dissolved water having a concentration of dissolved hydrogen molecules of 0.8 ppm or more, the method **characterized by** causing a dissolved hydrogen molecule-stabilizing agent comprising a saccharide and/or a polyphenol to interact with electrolytic reduction water containing hydrogen molecules.

2. The method of producing hydrogen molecule-dissolved water according to claim 1, wherein an electrolytic cell is configured such that a cathode chamber having a cathode electrode and an anode chamber having an anode electrode are separated through a diaphragm that is made of a fluorine-based cation exchange membrane, the cathode electrode is porous, and the porous cathode electrode is disposed at a distance of 1. 0 mm or less from the diaphragm, and the electrolytic water is cathodic water obtained by supplying raw material water having a purity of 50µ/cm of conductivity to an electric reaction surface from pores or discharging water produced by an electrolytic reaction from the pores to a back portion of the electrode.

3. The method of producing hydrogen molecule-dissolved water according to claim 2, wherein the electrolytic cell is configured such that the anode electrode is porous and the porous anode electrode and the porous cathode electrode are brought into close contact with both sides of the diaphragm, and is provided with means for directly supplying the dissolved hydrogen molecule-stabilizing agent comprising a saccharide and/or a polyphenol to a surface of the cathode electrode.

4. The method of producing hydrogen molecule-dissolved water according to claim 2 or 3, wherein the electrolytic cell is an electrolytic cell that is configured such that the diaphragm is a porous fluorine-based cation exchange membrane and the anode electrode is brought into close contact with the diaphragm, and that has the cathode electrode where a tip end of an irregular projection structure is provided with a hole so that an aqueous solution of the dissolved hydrogen molecule-stabilizing agent comprising a saccharide and/or a polyphenol can be supplied to a surface of the electrode.

5. The method of producing hydrogen molecule-dissolved water according to claim 2, wherein the electrolytic cell uses an electrolytic cell configured such that the diaphragm is a fluorine-based cation exchange membrane, the anode electrode is brought into close contact with the diaphragm, an ion exchange resin is provided between the porous cathode electrode and the diaphragm to fill the ion exchange resin therein, and dissolved hydrogen molecule water produced by supplying raw material water having a purity of 50µ/cm of conductivity to a layer of the ion exchange resin is collected from a back side through the holes of the cathode electrode.

6. The method of producing hydrogen molecule-dissolved water according to claim 2, wherein the electrolytic cell uses an electrolytic cell configured such that the diaphragm is a fluorine-based cation exchange membrane, the anode electrode is brought into close contact with the diaphragm, an ion exchange resin chamber is provided between the porous cathode electrode and the diaphragm to fill the ion exchange resin therein, and dissolved hydrogen molecule water produced by supplying raw material water having a purity of 50µ/cm of conductivity to a front side of the cathode electrode in contact with a layer of the ion exchange resin from a back side of the cathode electrode through the holes of the cathode electrode and carrying out electrolysis is discharged from an exchange resin filled chamber.

7. The method of producing hydrogen molecule-dissolved water according to claim 2, wherein the electrolytic cell is an electrolytic cell that is configured such that the diaphragm is a fluorine-based cation exchange membrane, the anode electrode is brought into close contact with the diaphragm, an ion exchange resin is filled in between the porous cathode electrode and the diaphragm, a supplying chamber of a dissolved hydrogenmolecule-stabilizing agent aqueous solution, capable ofsupplying a dissolved hydrogen molecule-stabilizing agent aqueous solution is provided to a back side of the cathode electrode, and the dissolved hydrogen molecule-stabilizing agent is supplied from the supplying chamber of the dissolved hydrogen molecule-stabilizing agent aqueous solution through the holes of the cathode electrode.

8. The method of producing hydrogen molecule-dissolved water according to claim 5, wherein the electrolytic cell is an electrolytic cell configured such that a porous film is provided in between the porous cathode electrode and a supplying chamber of a dissolved hydrogen molecule-stabilizing agent aqueous solution.

9. The method of producing hydrogen molecule-dissolved water according to claim 2, wherein the electrolytic cell is an electrolytic cell configured such that the anode electrode is porous, the diaphragm is a fluorine-based cation exchange membrane, the porous anode electrode is brought into close contact with the diaphragm, an ion exchange resin is filled in between the diaphragm and the cathode electrode, a hollow fiber that has a thin pore is disposed inside an ion exchange filling tank, and a dissolved hydrogen molecule-stabilizing agent aqueous solution can be supplied to a surface of the cathode electrode via the hollow fiber.

10. The method of producing hydrogen molecule-dissolved water according to claim 5, wherein the electrolytic cell is an electrolytic cell configured such that hydrogenmolecules produced from the porous cathode electrode is supplied to a supplying chamber of a dissolved hydrogen molecule-stabilizing agent aqueous solution.

11. The method of producing hydrogen molecule-dissolved water according to claim 5, 6, or 8, wherein the electrolytic cell is an electrolytic cell configured such that a circulation line is provided to each of a cathode chamber having the cathode electrode and a supplying chamber of a dissolved hydrogen molecule-stabilizing agent aqueous solution.

12. The method of producing hydrogen molecule-dissolved water according to claim 1, wherein, after interaction of the electrolytic reduction water containing hydrogen molecules with the dissolved hydrogen molecule-stabilizing agent is terminated, electrolytic oxidized water is used to sterilize and clean a cathode chamber and a line for supplying a hydrogen molecule-stabilizing agent.

13. An electrolytic cell for producing hydrogen molecule-dissolved water having a concentration of dissolved hydrogen molecules of 0.8 ppm or more, wherein the electrolytic cell is an electrolytic cell configured such that a cathode chamber having a cathode electrode and an anode chamber having an anode electrode are separated through a diaphragm that is made of a fluorine-based cation exchange membrane, the cathode electrode is porous, the porous cathode electrode is disposed at a distance of 1.0 mm or less from the diaphragm, and the electrolytic cell is provided with means for supplying a dissolved hydrogen molecule-stabilizing agent comprising a saccharide and/or a polyphenol.
